# EUROPEAN PATENT APPLICATION

(11) **EP 4 665 070 A1**
(43) Date of publication of application: **17.12.2025**
(21) Application number: 24752732.8
(22) Date of filing: 30.01.2024
(51) Int. Cl.: H04W 76/12, H04L 65/1016, H04L 65/1069, H04L 65/1089, H04L 67/02, H04W 76/11

(54) **DATA CHANNEL ESTABLISHMENT METHOD, APPARATUS, CORE NETWORK DEVICE AND STORAGE MEDIUM**

(30) Priority: 06.02.2023 CN 202310097316
(71) Applicant: Vivo Mobile Communication Co., Ltd., Dongguan, Guangdong 523863 (CN)
(72) Inventor: CHENG, Sihan, Dongguan, Guangdong 523863 (CN)
(74) Representative: Conti, Marco
(86) International application number: PCT/CN2024/074578
(87) International publication number: WO 2024/164876

(57) **Abstract**

This application discloses a method and apparatus for establishing a data channel, a core network device, and a storage medium, and pertains to the field of wireless communication technologies. The method for establishing a data channel according to embodiments of this application includes: receiving, by a first core network device, a first message sent by a second core network device, where the first message is used for establishing a data channel for a terminal, and the first message includes first information; creating, by the first core network device based on the first information, a uniform resource locator URL corresponding to the data channel; and sending, by the first core network device, a second message to the second core network device, where the second message includes the URL; where the first information includes at least one of the following: information used for identifying the data channel; and information used for indicating an application content source corresponding to the data channel.

## Description

### CROSS-REFERENCE TO RELATED APPLICATIONS

This application claims priority to Chinese Patent Application No. 202310097316.6, filed on February 6, 2023, the entire contents of which are incorporated herein by reference.

### TECHNICAL FIELD

This application pertains to the field of wireless communication technologies, and specifically to a method and apparatus for establishing a data channel, a core network device, and a storage medium.

### BACKGROUND

In related arts, a mechanism for establishing a data channel (Data Channel, DC) during a call has been introduced. Through the DC, additional services such as screen sharing, location sharing, and file transmission can be performed during the call, thereby providing users with enhanced experience. Different services correspond to different DC applications (application, APP). The DC application can be dynamically downloaded to a terminal during the call without requiring pre-installation on the terminal, facilitating user convenience.

In related arts, when establishing a DC, a data channel signaling function (Data Channel Signaling Function, DCSF) assigns a uniform resource locator (Uniform Resource Locator, URL) to user equipment (User Equipment, UE, also referred to as a terminal) and sends the URL to a data channel media function (data channel media function, DCMF) via an IP multimedia subsystem (IP Multimedia Subsystem, IMS) application server (Application Server, AS). When the DCMF receives a hyper text transfer protocol (Hyper Text Transfer Protocol, HTTP) GET request containing a root URL (root URL) sent by the UE through the established DC, the DCMF replaces the root URL with the URL and sends the replaced HTTP GET message to the DCSF. The DCSF determines the requesting UE based on the URL and sends corresponding information such as a graphical user interface or an APP list (list) to the UE.

Related arts provide solutions premised on a single UE establishing only one DC. For scenarios where a single UE can establish multiple DCs, how to establish the DCs for the UE remains an urgent problem to be solved.

### SUMMARY

An embodiment of this application provides a method and apparatus for establishing a data channel, a core network device, and a storage medium, capable of addressing the issue of establishing multiple DCs for a UE.

According to a first aspect, a method for establishing a data channel is provided, including:
receiving, by a first core network device, a first message sent by a second core network device, where the first message is used for establishing a data channel for a terminal, and the first message includes first information;
creating, by the first core network device based on the first information, a uniform resource locator URL corresponding to the data channel; and
sending, by the first core network device, a second message to the second core network device, where the second message includes the URL;
where the first information includes at least one of the following:
   information used for identifying the data channel; and
   information used for indicating an application content source corresponding to the data channel.

According to a second aspect, a method for establishing a data channel is provided, including:
sending, by a second core network device, a first message to a first core network device, where the first message is used for establishing a data channel for a terminal, and the first message includes first information;
receiving, by the second core network device, a second message sent by the first core network device, where the second message includes a URL corresponding to the data channel; and
sending, by the second core network device, a third message to a third core network device, where the third message is used for establishing the data channel for the terminal, and the third message includes information used for identifying the data channel and the URL;
where the first information includes at least one of the following:
   the information used for identifying the data channel; and
   information used for indicating an application content source corresponding to the data channel.

According to a third aspect, a method for establishing a data channel is provided, including:
receiving, by a third core network device, a third message, where the third message is used for establishing a data channel for a terminal, and the third message includes information used for identifying the data channel and a URL corresponding to the data channel; and
recording, by the third core network device, a first correspondence, where the first correspondence is a correspondence between the information used for identifying the data channel and the URL corresponding to the data channel.

According to a fourth aspect, an apparatus for establishing a data channel is provided, including:
a first receiving module configured to receive a first message sent by a second core network device, where the first message is used for establishing a data channel for a terminal, and the first message includes first information;
a URL creation module configured to create, based on the first information, a URL corresponding to the data channel; and
a first sending module configured to send a second message to the second core network device, where the second message includes the URL; where
the first information includes at least one of the following:
   information used for identifying the data channel; and
   information used for indicating an application content source corresponding to the data channel.

According to a fifth aspect, an apparatus for establishing a data channel is provided, including:
a first sending module configured to send a first message to a first core network device, where the first message is used for establishing a data channel for a terminal, and the first message includes first information;
a first receiving module configured to receive a second message sent by the first core network device, where the second message includes a URL corresponding to the data channel; and
a second sending module configured to send a third message to a third core network device, where the third message is used for establishing the data channel for the terminal, and the third message includes information used for identifying the data channel and the URL; where
the first information includes at least one of the following:
   the information used for identifying the data channel; and
   information used for indicating an application content source corresponding to the data channel.

According to a sixth aspect, an apparatus for establishing a data channel is provided, including:
a first receiving module configured to receive a third message, where the third message is used for establishing a data channel for a terminal, and the third message includes information used for identifying the data channel and a URL corresponding to the data channel; and
a recording module configured to record a first correspondence, where the first correspondence is a correspondence between the information used for identifying the data channel and the URL corresponding to the data channel.

According to a seventh aspect, a first core network device is provided, and the first core network device includes a processor and a memory, where the memory stores a program or an instruction capable of running on the processor, and when executed by the processor, the program or instruction implements the steps of the method according to the first aspect.

According to an eighth aspect, a first core network device is provided, including a processor and a communication interface. The communication interface is configured to receive a first message sent by a second core network device, where the first message is used for establishing a data channel for a terminal, and the first message includes first information. The processor is configured to create, based on the first information, a URL corresponding to the data channel. The communication interface is further configured to send a second message to the second core network device, where the second message includes the URL; where
the first information includes at least one of the following:
information used for identifying the data channel; and
information used for indicating an application content source corresponding to the data channel.

According to a ninth aspect, a second core network device is provided, and the second core network device includes a processor and a memory, where the memory stores a program or an instruction capable of running on the processor, and when executed by the processor, the program or instruction implements the steps of the method according to the second aspect.

According to a tenth aspect, a second core network device is provided, including a processor and a communication interface. The communication interface is configured to send a first message to a first core network device, where the first message is used for establishing a data channel for a terminal, and the first message includes first information; receive a second message sent by the first core network device, where the second message includes a URL corresponding to the data channel; and send a third message to a third core network device, where the third message is used for establishing the data channel for the terminal, and the third message includes information used for identifying the data channel and the URL; where
the first information includes at least one of the following:
the information used for identifying the data channel; and
information used for indicating an application content source corresponding to the data channel.

According to an eleventh aspect, a third core network device is provided, and the third core network device includes a processor and a memory, where the memory stores a program or an instruction capable of running on the processor, and when executed by the processor, the program or instruction implements the steps of the method according to the third aspect.

According to a twelfth aspect, a third core network device is provided, including a processor and a communication interface. The communication interface is configured to receive a third message, where the third message is used for establishing a data channel for a terminal, and the third message includes information used for identifying the data channel and a URL corresponding to the data channel. The processor is configured to record a first correspondence, where the first correspondence is a correspondence between the information used for identifying the data channel and the URL corresponding to the data channel.

According to a thirteenth aspect, a communication system is provided, including a first core network device, a second core network device, and a third core network device. The first core network device can be configured to perform the steps of the method for establishing a data channel according to the first aspect. The second core network device can be configured to perform the steps of the method for establishing a data channel according to the second aspect. The third core network device can be configured to perform the steps of the method for establishing a data channel according to the third aspect.

According to a fourteenth aspect, a readable storage medium is provided, where the readable storage medium stores a program or an instruction, and when executed by a processor, the program or instruction implements the steps of the method for establishing a data channel according to the first aspect, the second aspect, or the third aspect.

According to a fifteenth aspect, a chip is provided, and the chip includes a processor and a communication interface. The communication interface is coupled to the processor, and the processor is configured to run a program or instructions to implement the method for establishing a data channel according to the first aspect, the second aspect, or the third aspect.

According to a sixteenth aspect, a computer program/program product is provided, where the computer program/program product is stored in a storage medium, and the computer program/program product is executed by at least one processor to implement the steps of the method for establishing a data channel according to the first aspect, the second aspect, or the third aspect.

In the embodiments of this application, when the second core network device sends the first message to the first core network device to notify the establishment of the data channel for the terminal, the information used for identifying the data channel or the information used for indicating the application content source corresponding to the data channel is added. Thus, after creating the URL corresponding to the data channel, the first core network device can ascertain the correspondence between the data channel and the URL, and upon receiving a request containing the URL, can determine the UE or the data channel corresponding to the UE, thereby returning correct information. Additionally, when the second core network device sends the third message to the third core network device to notify the establishment of the data channel for the terminal, the information used for identifying the data channel and the URL assigned to the data channel are added, enabling the third core network device to ascertain the correspondence between the data channel and the URL, and upon receiving a request containing the information used for identifying the data channel, correctly replace the URL based on the correspondence, thereby completing DC services during a call.

### BRIEF DESCRIPTION OF DRAWINGS

FIG. 1 is a block diagram of a wireless communication system to which an embodiment of this application can be applied;
FIG. 2 is a first schematic flowchart of a method for establishing a data channel according to an embodiment of this application;
FIG. 3 is a second schematic flowchart of a method for establishing a data channel according to an embodiment of this application;
FIG. 4 is a third schematic flowchart of a method for establishing a data channel according to an embodiment of this application;
FIG. 5 is a schematic flowchart of a method for establishing a data channel according to an embodiment of this application;
FIG. 6 is a first schematic structural diagram of an apparatus for establishing a data channel according to an embodiment of this application;
FIG. 7 is a second schematic structural diagram of an apparatus for establishing a data channel according to an embodiment of this application;
FIG. 8 is a third schematic structural diagram of an apparatus for establishing a data channel according to an embodiment of this application;
FIG. 9 is a first schematic structural diagram of a core network device according to an embodiment of this application; and
FIG. 10 is a second schematic structural diagram of a core network device according to an embodiment of this application.

### DESCRIPTION OF EMBODIMENTS

The technical solutions in the embodiments of this application will be clearly described below with reference to the accompanying drawings in the embodiments of this application. Apparently, the described embodiments are some, but not all, embodiments of this application. All other embodiments obtained by a person of ordinary skill in the art based on the embodiments of this application fall within the protection scope of this application.

The terms "first," "second," and the like in the description and claims of this application are used to distinguish between similar objects and are not used to describe a specific order or sequence. It should be understood that the terms so used are interchangeable under appropriate circumstances such that the embodiments of this application can be implemented in sequences other than those illustrated or described herein. Moreover, the objects distinguished by "first" and "second" are usually of one type, and the number of objects is not limited. For example, the first object may be one or more than one. Additionally, "or" in the descriptions and claims indicates at least one of the connected objects. For example, "A or B" covers three scenarios: scenario one, including A but not B; scenario two, including B but not A; and scenario three, including both A and B. The character "/" generally indicates an "or" relationship between the associated objects. The term "indicate" in the description and claims of this application can be either an explicit indication or an implicit indication. An explicit indication can be understood as a sender clearly informing a receiver of an action to be performed or a result of a request in a sent indication. An implicit indication can be understood as a receiver making a judgment based on an indication sent by a sender and determining an action to be performed or a result of a request based on the judgment result.

It is worth noting that the technology described in the embodiments of this application is not limited to long term evolution (Long Term Evolution, LTE)/LTE-advanced (LTE-Advanced, LTE-A) systems but can also be applied to other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the described technology can be applied to the systems and radio technologies mentioned above as well as other systems and radio technologies. The following description describes a new radio (New Radio, NR) system for exemplary purposes, and NR terminology is used in much of the description below, but these technologies can also be applied to applications other than NR system applications, such as 6^{th} generation (6^{th} Generation, 6G) communication systems.

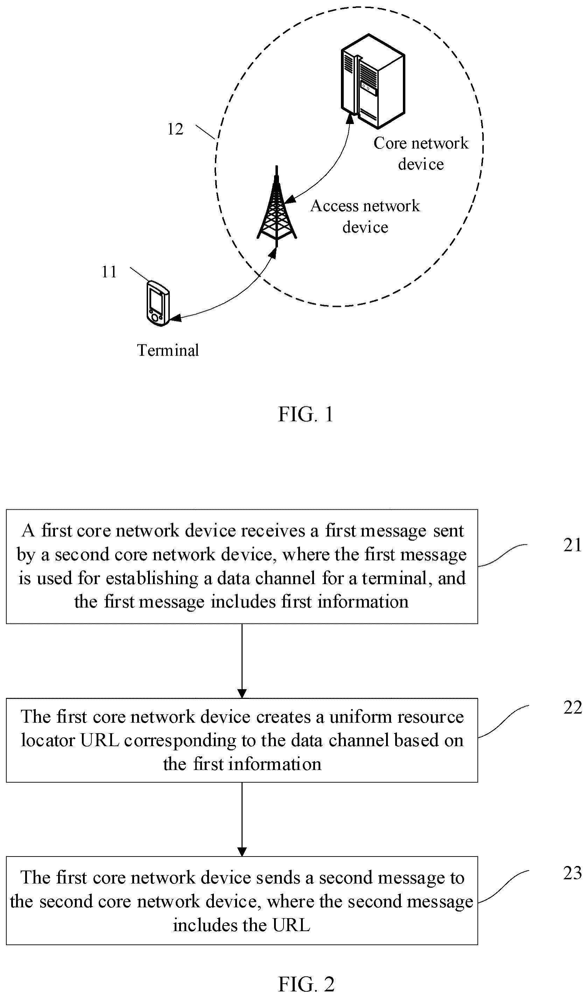

FIG. 1 is a block diagram of a wireless communication system to which an embodiment of this application can be applied. The wireless communication system includes a terminal 11 and a network-side device 12. The terminal 11 may be a mobile phone, a tablet personal computer (Tablet Personal Computer), a laptop computer (Laptop Computer) or referred to as a notebook computer, a personal digital assistant (Personal Digital Assistant, PDA), a handheld computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (wireless communication-enabled household devices such as refrigerators, televisions, washing machines, or furniture), a gaming console, a personal computer (personal computer, PC), an automated teller machine, a self-service terminal, and another terminal-side device. The wearable device includes a smartwatch, a smart band, smart earphones, smart glasses, a smart jewelry (smart bracelet, smart chain, smart ring, smart necklace, smart anklet, or smart foot chain), a smart wristband, smart clothing, or the like. In addition to the aforementioned terminal devices, it may also be a chip within the terminal, such as a modem (Modem) chip or a system on chip (System on Chip, SoC). It should be noted that the specific type of the terminal 11 is not limited in the embodiments of this application. The network-side device 12 may include an access network device or a core network device. The access network device 12 may also be referred to as a radio access network device, radio access network (Radio Access Network, RAN), radio access network function, or radio access network unit. The access network device 12 may include a base station, wireless local area network (Wireless Local Area Network, WLAN) access point, wireless fidelity (Wireless Fidelity, WiFi) node, or the like. The base station may be referred to as a Node B, an evolved Node B (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home Node B, a home evolved Node B, a transmission and reception point (Transmission and Reception Point, TRP), or other suitable terms in the field, as long as the same technical effect is achieved. The base station is not limited to specific technical terminology. It should be noted that in the embodiments of this application, only base stations in NR systems are used as examples, and the specific type of the base station is not limited. The core network device may include, but is not limited to, at least one of the following: core network node, core network function, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF, or L-NEF), binding support function (Binding Support Function, BSF), or application function (Application Function, AF). It should be noted that in the embodiments of this application, only core network devices in NR systems are used as examples, and the specific type of the core network device is not limited.

The method and apparatus for establishing a data channel, the core network device, and the storage medium provided by the embodiments of this application are described in detail below through some embodiments and their application scenarios with reference to the accompanying drawings.

In the embodiments of this application, a DC application is referred to as an APP.

A data channel (DC) in the embodiments of this application may include the following two types:
1. Bootstrap data channel (Bootstrap DC), used to download an APP from a data channel server (for example, DCSF (data channel signaling function, data channel signaling function)).
2. Application data channel (Application DC), used to transmit data of the APP.

Referring to FIG. 2, an embodiment of this application provides a method for establishing a data channel, including:
Step 21: A first core network device receives a first message sent by a second core network device, where the first message is used for establishing a data channel for a terminal, and the first message includes first information.

In the embodiments of this application, the first core network device may be a DCSF or another entity capable of implementing a data channel signaling function, which is not limited herein.

In the embodiments of this application, the second core network device is configured to provide services for the terminal and may be an IP multimedia subsystem (IP Multimedia Subsystem, IMS) application server (Application Server, AS) or the like. The IMS AS is for example telephony application server (Telephony Application Server, TAS) or a DC AS.

Step 22: The first core network device creates a uniform resource locator URL corresponding to the data channel based on the first information.

In the embodiments of this application, that the first core network device creates a URL corresponding to the data channel may also be described as: the first core network device creates (create) the URL corresponding to the data channel, the first core network device assigns the URL corresponding to the data channel, or the like.

The uniform resource locator URL corresponding to the data channel may also be described as: a URL of the data channel, or a URL created in creating the data channel.

Optionally, the data channel is a bootstrap DC.

The first core network device records a correspondence or association between the first information and the URL.

Step 23: The first core network device sends a second message to the second core network device, where the second message includes the URL.

The first information includes at least one of the following:
information used for identifying the data channel;
information used for indicating an application content source (application content source or data channel application content source) corresponding to the data channel.

In the embodiments of this application, the first core network device receives the first message for establishing the channel for the terminal, where the first message carries the information used for identifying the data channel or the information used for indicating the application content source corresponding to the data channel. Thus, after creating the URL corresponding to the data channel, the first core network device can ascertain the correspondence between the data channel and the URL, and upon receiving a request containing the URL, can determine the UE or the data channel corresponding to the UE, thereby returning correct information.

Optionally, the first message may be an IP multimedia subsystem application server session event control notify (Nimsas_SessionEventControl_Notify) message.

In addition to the first information, the first message may further include at least one of the following:
event identifier (Event ID): for example, in establishing a bootstrap DC, the event ID is SessionEstablishmentRequestEvent;
calling party identifier (CallingID): for example, it may be an IMS public identity (IMS Public Identity, IMPU) of a calling terminal;
called party identifier (CalledID): for example, it may be an IMPU of a called terminal;
SessionCase: indicating whether a session (session) is triggered by a calling party or a called party;
session identifier (SessionID); and
media information list (MediaInfoList): each piece of media information includes a media ID (Media ID) and media attribute information, for example, media information corresponding to a bootstrap DC or media information corresponding to an application DC.

In the embodiments of this application, optionally, the information used for identifying the data channel includes at least one of the following:
a stream identifier (stream ID) corresponding to the data channel; and
description information of the data channel.

The description information of the data channel is used to describe attributes or characteristics of the data channel, and the information is used to distinguish different data channels.

Optionally, the second message may be for example an IP multimedia subsystem application server media control media instruction (Nimsas_MediaControl_MediaInstruction) message.

In the embodiments of this application, optionally, the information used for indicating the application content source corresponding to the data channel includes at least one of the following:
information used for indicating that the application content source corresponding to the data channel is a local network provider (Local network provider);
information used for indicating that the application content source corresponding to the data channel is a local user (Local user);
information used for indicating that the application content source corresponding to the data channel is a remote network provider (Remote network provider); and
information used for indicating that the application content source corresponding to the data channel is a remote user (Remote user).

The standard specifies that stream IDs 0, 10, 100, and 110 correspond to application content sources as shown in Table 1:

**Table 1**

| Stream ID | Content source |
|---|---|
| 0 | Local network provider |
| 10 | Local user |
| 100 | Remote network provider |
| 110 | Remote user |

In the embodiments of this application, the second core network device may include only the information used for identifying the data channel in the first message sent to the first core network device, and the first core network device determines the application content source based on the information used for identifying the data channel. Alternatively, after determining the application content source based on the information used for identifying the data channel, the second core network device may include only the information used for indicating the application content source corresponding to the data channel in the first message sent to the first core network device. Meanwhile, the first core network device may determine the information used for identifying the data channel based on the information used for indicating the application content source corresponding to the data channel.

In the above embodiments, the second message sent by the first core network device to the second core network device includes the created URL of the data channel, and the second core network device can determine, based on a data channel currently being established, the information used for identifying the data channel corresponding to the URL. Thus, the first core network device may not include the information used for identifying the data channel in the second message. However, in some embodiments, the first core network device may alternatively include the information used for identifying the data channel in the second message, that is, the second message further includes the information used for identifying the data channel.

In the embodiments of this application, optionally, the method for establishing a data channel further includes: receiving, by the first core network device, a first request, where the first request includes the URL; and determining, by the first core network device, the terminal or the data channel based on the URL. For example, the first core network device determines, based on the URL, a stream ID corresponding to the data channel of the terminal.

In the embodiments of this application, optionally, the method for establishing a data channel further includes: sending, by the first core network device, information corresponding to the data channel to the terminal based on the first request. The information may be an initialized user interface for a user to select or search for an APP. The information may be, for example, a graphical user interface or an APP list (list). For example, the first core network device determines, based on the URL, the stream ID corresponding to the data channel of the terminal, determines an APP list to be sent to the terminal based on the stream ID and Table 1, and sends the APP list to the terminal.

In the embodiments of this application, optionally, the information includes an application APP list, where download addresses of APPs in the APP list are related to the terminal or the data channel.

In the embodiments of this application, that the download addresses of the APPs are related to the terminal or the data channel may also be described as: the download addresses of the APPs are related to the terminal or the data channel of the terminal, the download addresses of the APPs correspond to the terminal or the data channel, the download addresses of the APPs correspond to the terminal or the data channel of the terminal, the terminal or the data channel can be determined through the download addresses of the APPs, or the terminal or the data channel of the terminal can be determined through the download addresses of the APPs.

In the embodiments of this application, optionally, the method for establishing a data channel further includes: receiving, by the first core network device, a second request, where the second request includes a download address of an APP; and determining, by the first core network device, the terminal or the data channel based on the download address of the APP.

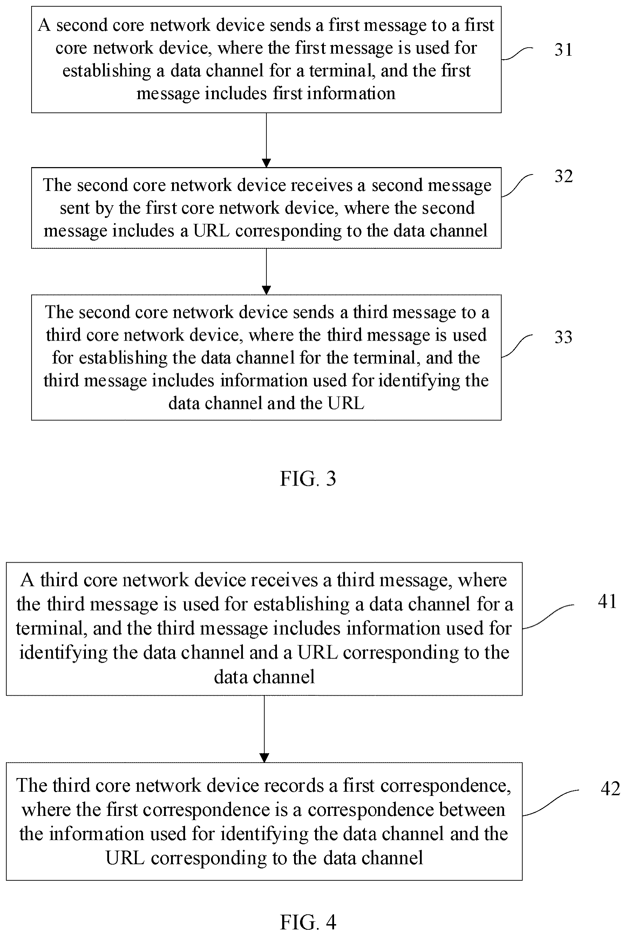

Referring to FIG. 3, an embodiment of this application further provides a method for establishing a data channel, including:
Step 31: A second core network device sends a first message to a first core network device, where the first message is used for establishing a data channel for a terminal, and the first message includes first information.
Step 32: The second core network device receives a second message sent by the first core network device, where the second message includes a URL corresponding to the data channel.
Step 33: The second core network device sends a third message to a third core network device, where the third message is used for establishing the data channel for the terminal, and the third message includes information used for identifying the data channel and the URL.

The first information includes at least one of the following:
the information used for identifying the data channel; and
information used for indicating an application content source corresponding to the data channel.

In the embodiments of this application, when the second core network device sends the first message to the first core network device to notify the establishment of the data channel for the terminal, the information used for identifying the data channel or the information used for indicating the application content source corresponding to the data channel is added. Thus, after creating the URL corresponding to the data channel, the first core network device can ascertain the correspondence between the data channel and the URL, and upon receiving a request containing the URL, can determine the UE or the data channel corresponding to the UE, thereby returning correct information. Additionally, when the second core network device sends the third message to the third core network device to notify the establishment of the data channel for the terminal, the information used for identifying the data channel and the URL assigned to the data channel are added, enabling the third core network device to ascertain the correspondence between the data channel and the URL, and upon receiving a request containing the information used for identifying the data channel, correctly replace the URL based on the correspondence, thereby completing DC services during a call.

In the embodiments of this application, the first core network device may be a DCSF or the like.

In the embodiments of this application, the first message may be, for example, an IP multimedia subsystem application server session event control notify (Nimsas_SessionEventControl_Notify) message.

Optionally, the second message may be, for example, an IP multimedia subsystem application server media control media instruction (Nimsas_MediaControl_MediaInstruction) message.

In the embodiments of this application, in addition to the first information, the first message may further include at least one of the following:
event identifier (Event ID): for example, in establishing a bootstrap DC, the event ID is SessionEstablishmentRequestEvent;
calling party identifier (CallingID): for example, it may be an IMS public identity (IMS Public Identity, IMPU) of a calling terminal;
called party identifier (CalledID): for example, it may be an IMPU of a called terminal;
SessionCase: indicating whether a session (session) is triggered by a calling party or a called party;
session identifier (SessionID); and
media information list (MediaInfoList): each piece of media information includes a media ID (Media ID) and media attribute information, for example, media information corresponding to a bootstrap DC or media information corresponding to an application DC.

In the embodiments of this application, the second core network device is configured to provide services for the terminal and may be an IMS AS or the like. The IMS AS may be, for example, a telephony application server (Telephony Application Server, TAS) or a DC AS.

In the embodiments of this application, the third core network device may be a DCMF, a media resource function (Media Resource Function, MRF), an enhanced (enhanced) MRF, or the like.

In the embodiments of this application, optionally, the information used for identifying the data channel includes at least one of the following:
a stream identifier stream ID corresponding to the data channel; and
description information of the data channel.

In the embodiments of this application, optionally, the information used for indicating the application content source corresponding to the data channel includes at least one of the following:
information used for indicating that the application content source corresponding to the data channel is a local network provider;
information used for indicating that the application content source corresponding to the data channel is a local user;
information used for indicating that the application content source corresponding to the data channel is a remote network provider; and
information used for indicating that the application content source corresponding to the data channel is a remote user.

In the embodiments of this application, the second message sent by the first core network device to the second core network device includes the created URL of the data channel, and the second core network device can determine, based on a data channel currently being established, the information used for identifying the data channel corresponding to the URL. Thus, the first core network device may not include the information used for identifying the data channel in the second message. However, in some embodiments, the first core network device may alternatively include the information used for identifying the data channel in the second message, that is, the second message further includes the information used for identifying the data channel.

Referring to FIG. 4, an embodiment of this application further provides a method for establishing a data channel, including:
Step 41: A third core network device receives a third message, where the third message is used for establishing a data channel for a terminal, and the third message includes information used for identifying the data channel and a URL corresponding to the data channel.

That the third message is used for establishing a data channel for a terminal may also be described as: the third message is used for creating, for the terminal, a media resource (media resource) corresponding to the data channel, for example, a media resource used for establishing a connection or media path (media path) between the third core network device and the first core network device, or a media resource used for establishing a connection or media path (media path) between the third core network device and an IMS access gateway (Access Gateway, AGW).

Optionally, the third message is a data channel media function media resource management create (Ndcmf_MediaResourceManagement_Create) message.

Step 42: The third core network device records a first correspondence, where the first correspondence is a correspondence between the information used for identifying the data channel and the URL corresponding to the data channel.

That the third core network device records a first correspondence may also be described as: the third core network device saves the first correspondence, or the third core network device stores the first correspondence.

In the embodiments of this application, the third core network device receives the third message for establishing the channel for the terminal, where the third message carries the information used for identifying the data channel and the URL assigned to the data channel, enabling the third core network device to ascertain the correspondence between the data channel and the URL, and upon receiving a request containing the information used for identifying the data channel, correctly replace the URL based on the correspondence, thereby completing DC services during a call.

In the embodiments of this application, the third core network device may be a DCMF or the like.

In the embodiments of this application, optionally, the information used for identifying the data channel includes at least one of the following:
a stream identifier stream ID corresponding to the data channel; and
description information of the data channel.

In the embodiments of this application, optionally, the method for establishing a data channel further includes:
establishing, by the third core network device, a stream control transmission protocol (Stream Control Transmission Protocol, SCTP) connection to the terminal, where the SCTP connection corresponds to a first stream ID, and that the SCTP connection corresponds to a first stream ID may also be described as: the first stream ID of the SCTP connection, or a stream ID of the SCTP connection is the first stream ID;
receiving, by the third core network device, a first request sent by the terminal through the SCTP connection, where the first request includes a root URL;
determining, by the third core network device, the URL based on the first stream ID and the recorded first correspondence in a case that the first stream ID is the same as the stream identifier stream ID corresponding to the data channel;
replacing, by the third core network device, the root URL in the first request with the URL to obtain a replaced first request; and
sending, by the third core network device, the replaced first request to a first core network device, where the replaced first request is a new first request obtained by replacing a parameter in the first request.

The above embodiment describes a case that the first stream ID is the same as the stream identifier stream ID corresponding to the data channel in the first correspondence. However, the first stream ID may alternatively be different from the stream identifier stream ID corresponding to the data channel in the first correspondence but the same as a stream ID in a second correspondence (different from the first correspondence) that is between a stream ID of a data channel and a URL and that is recorded by the third core network device. In this case, the URL for replacing the root URL is determined based on the second correspondence.

The above method for establishing a data channel is described below with reference to specific application scenarios.

### Embodiment 1 of this application

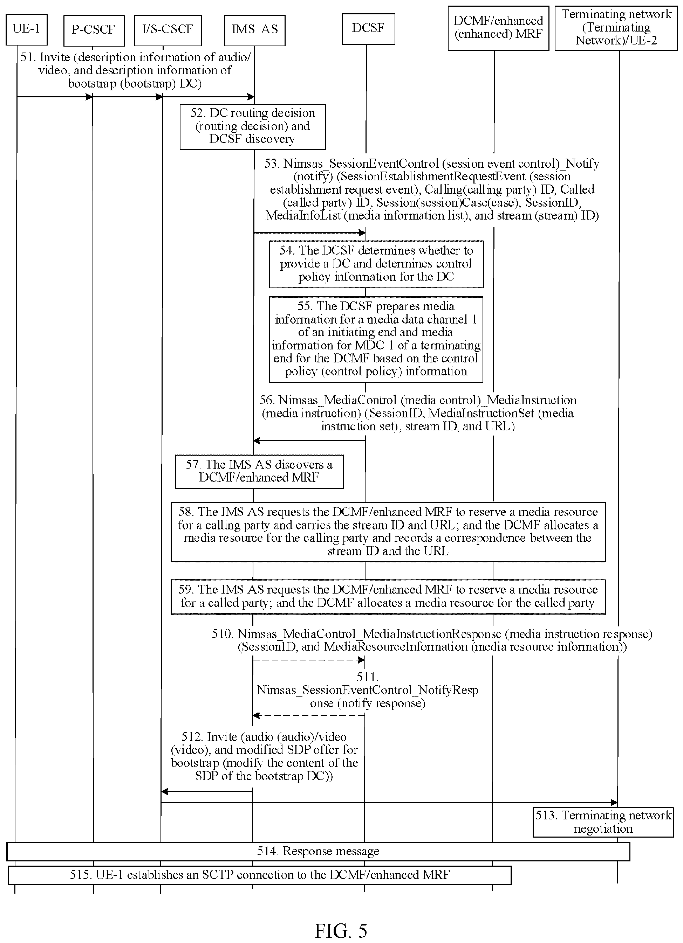

Referring to FIG. 5, an embodiment of this application provides a method for establishing a data channel, which is described by taking the establishment of a bootstrap DC as an example in this embodiment.

The method for establishing a data channel in this embodiment includes the following steps:
Step 51: UE-1 initiates a call request to UE-2 through a session initiation protocol (Session Initiation Protocol, SIP) invite (invite) message, where the SIP invite message carries a session description protocol (Session Description Protocol, SDP) offer (offer), and the SDP offer is used to describe media description information corresponding to the call.

The SDP offer includes description information of audio/video (audio/video) and description information of a bootstrap DC to be established.

An example of the description information of the bootstrap DC to be established is as follows:
m=application 52718 UDP/DTLS/SCTP webrtc-datachannel
b=AS:500
a=max-message-size: 1024
a=sctp-port:5000
a=dcmap:0 subprotocol="http"
where m line indicates that a media type is data channel;
line b indicates that a bandwidth corresponding to the data channel is 500 kbps;
line a indicate attribute information of the data channel:
   a=max-message-size:1024 indicates that a maximum value of messages that can be transmitted by the data channel is 1024 bytes;
   a=sctp-port:5000 indicates that a port number corresponding to the data channel is 5000;
   a=dcmap:0 subprotocol="http" indicates that an APP corresponding to the bootstrap DC is provided by a network operator of UE-1;
   a=dcmap: 10 subprotocol="http" indicates that an APP corresponding to the bootstrap DC is provided by UE-1;
   a=dcmap:100 subprotocol="http" indicates that an APP corresponding to the bootstrap DC is provided by a network operator of UE-2; and
   a=dcmap:110 subprotocol="http" indicates that an APP corresponding to the bootstrap DC is provided by UE-2.

The values 0, 10, 100, and 110 in line a are stream IDs of the DC, where the stream ID is used for identifying the DC. Typically, 0-999 are used for identifying bootstrap DCs, and values greater than or equal to 1000 are used for identifying an application DC. For example, a=dcmap:0 subprotocol="http" indicates that a stream ID corresponding to the bootstrap DC is 0; and a=dcmap:100 subprotocol="http" indicates that a stream ID corresponding to the bootstrap DC is 100.

In this embodiment, the stream ID corresponding to the bootstrap DC is 0.

The SIP invite message is routed through a proxy call session control function (Proxy CSCF, P-CSCF) and a serving call session control function (Serving CSCF, S-CSCF) serving UE-1, and is ultimately routed to an IMS AS such as a telephony application server (Telephony Application Server, TAS) serving UE-1
Step 52: The IMS AS authenticates UE-1 based on subscription information of a user. If UE-1 can use a DC service, the IMS AS selects a DCSF.

Step 53: The IMS AS sends a Nimsas_SessionEventControl_Notify message to the DCSF to notify the DCSF to establish a bootstrap DC for UE-1.

The Nimsas_SessionEventControl_Notify message may include the following information:
event identifier (Event ID): for example, in establishing a bootstrap DC, the event ID is SessionEstablishmentRequestEvent;
calling party identifier (CallingID): that is, an ID of UE-1, for example, an IMPU of UE-1;
called party identifier (CalledID): that is, an ID of UE-2, for example, an IMPU of UE-2;
SessionCase: indicating whether a session is triggered by a calling party or a called party;
session identifier (SessionID);
media information list (MediaInfoList): each piece of media information includes a media ID and media attribute information, for example, media information corresponding to a bootstrap DC or media information corresponding to an application DC; and
stream ID used for identifying the bootstrap DC to be established.

Step 54: The DCSF determines whether to provide a DC and determines control policy (control policy) information for the DC.

Step 55: The DCSF prepares media information for a media data channel (Media Data Channel, MDC) 1 of an initiating end (UE-1) and media information for MDC 1 of a terminating end (UE-2) for a DCMF based on the control policy information.

The MDC 1 is an interface between the DCMF/enhanced (enhanced) media resource function (Media Resource Function, MRF) and the DCSF, and used for transmitting media data such as an installation package of an APP, an APP list, or a graphical user interface (graphical user interface) between the DCSF and the DCMF/enhanced MRF.

Step 56: The DCSF sends a Nimsas_MediaControl_MediaInstruction message to the IMS AS to instruct the IMS AS to establish connections to the DCMF for two communication parties (UE-1 and UE-2). The Nimsas_MediaControl_MediaInstruction message includes URL information corresponding to the bootstrap DC (the stream ID), or includes the URL information corresponding to the bootstrap DC and the stream ID of the bootstrap DC.

In this step, the Nimsas_MediaControl_MediaInstruction message may not include the stream ID of the bootstrap DC, as the IMS AS can ascertain a stream ID of a bootstrap DC currently being established.

The DCSF records a correspondence or association between the stream ID of the bootstrap DC and the URL corresponding to the bootstrap DC.

Step 57: The IMS AS discovers the DCMF/enhanced MRF.

Step 58 and step 59: The IMS AS sends a Ndcmf_MediaResourceManagement_Create message to the DCMF, where the message includes media resource information reserved for the calling party, media resource information reserved for the called party, the URL information corresponding to the bootstrap DC, and the stream ID of the bootstrap DC. The DCMF records a first correspondence, where the first correspondence is a correspondence or association between the stream ID of the bootstrap DC and the URL corresponding to the bootstrap DC. For example, when the URL corresponding to the bootstrap DC is a first URL, the first correspondence is a correspondence between stream ID=0 and the first URL.

Note: Steps 58 and 59 may alternatively be performed in a single step.

Step 510: The IMS AS responds to the message of step 56 by sending a Nimsas_MediaControl_MediaInstructionResponse message to the DCSF, so as to indicate whether a media resource have been successfully reserved.

Step 511: The DCSF responds to the message of step 53.

Step 512: The IMS AS modifies content of the SDP sent to UE-2 by adding media information of the DCMF or enhanced MRF.

Step 513: Network processing on the UE-2 side.

Step 514: UE-2 replies with a response message to complete the establishment of the data channel.

Step 515: UE-1 establishes an SCTP connection to the DCMF, where the SCTP connection is used for transmitting an HTTP message. The SCTP connection corresponds to one stream ID, and the stream ID is the stream ID negotiated in Step 51.

Subsequently, UE-1 sends an HTTP GET request containing a root URL by using the SCTP connection.

The DCMF obtains the stream ID corresponding to the SCTP connection. In this embodiment, the stream ID corresponding to the SCTP connection is 0.

The DCMF obtains the URL corresponding to the bootstrap DC based on the stream ID corresponding to the SCTP connection and the recorded first correspondence. In this embodiment, based on the example in steps 58 and 59, the stream ID of the SCTP connection is 0, and the first correspondence is a correspondence between stream ID=0 and the first URL. Thus, the DCMF can obtain the first URL.

The DCMF replaces the root URL with the obtained URL and sends it to the DCSF. The DCSF determines UE-1 or the bootstrap DC of UE-1 based on the URL and sends corresponding information such as a graphical user interface or an APP list to UE-1. The DCSF determines UE-1 or the bootstrap DC of UE-1 based on the correspondence recorded in step 56 and the URL included in the HTTP GET message.

Optionally, in the APP list, the URL corresponding to each APP corresponds to or is associated with UE-1. Further optionally, the URL corresponding to each APP corresponds to or is associated with the bootstrap DC of UE-1.

When UE-1 downloads an APP using the APP list, UE-1 sends an URL corresponding to the APP to the DCSF, and the DCSF can ascertain, based on the URL corresponding to the APP, that it is UE-1 requesting to download the APP. Further optionally, the DCSF can ascertain, based on the URL corresponding to the APP, that it is UE-1 requesting to download the APP by using the bootstrap DC.

The method for establishing a data channel provided by the embodiments of this application may be executed by an apparatus for establishing a data channel. In the embodiments of this application, the apparatus for establishing a data channel performing the method for establishing a data channel is taken as an example to describe the apparatus for establishing a data channel provided by the embodiments of this application.

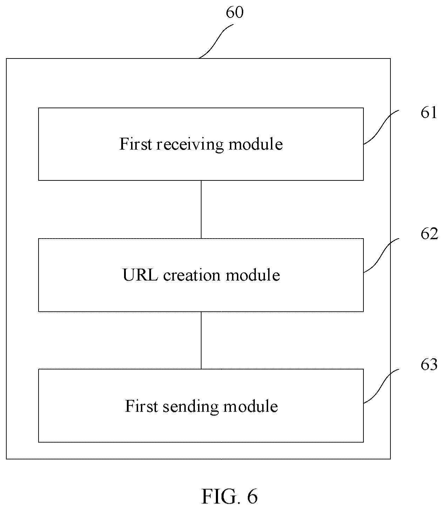

Referring to FIG. 6, an embodiment of this application further provides an apparatus 60 for establishing a data channel, including:
a first receiving module 61 configured to receive a first message sent by a second core network device, where the first message is used for establishing a data channel for a terminal, and the first message includes first information;
a URL creation module 62 configured to create, based on the first information, a URL corresponding to the data channel; and
a first sending module 63 configured to send a second message to the second core network device, where the second message includes the URL; where
the first information includes at least one of the following:
   information used for identifying the data channel; and
   information used for indicating an application content source corresponding to the data channel.

Optionally, the information used for identifying the data channel includes at least one of the following:
a stream identifier stream ID corresponding to the data channel; and
description information of the data channel.

In the embodiments of this application, the first message for establishing the channel for the terminal is received, where the first message carries the information used for identifying the data channel or the information used for indicating the application content source corresponding to the data channel. Thus, after creating the URL corresponding to the data channel, the correspondence between the data channel and the URL can be ascertained. Upon receiving a request containing the URL, the UE or the data channel corresponding to the UE can be determined, so that correct information is returned.

Optionally, the information used for indicating the application content source corresponding to the data channel includes at least one of the following:
information used for indicating that the application content source corresponding to the data channel is a local network provider;
information used for indicating that the application content source corresponding to the data channel is a local user;
information used for indicating that the application content source corresponding to the data channel is a remote network provider; and
information used for indicating that the application content source corresponding to the data channel is a remote user.

Optionally, the second message further includes the information used for identifying the data channel.

Optionally, the apparatus 60 for establishing a data channel further includes:
a second receiving module configured to receive a first request, where the first request includes the URL; and
a second determining module configured to determine the terminal or the data channel based on the URL.

Optionally, the apparatus 60 for establishing a data channel further includes:
a second sending module configured to send information corresponding to the data channel to the terminal based on the first request.

Optionally, the information includes an application APP list, where download addresses of APPs in the APP list are related to the terminal or the data channel.

Optionally, the apparatus 60 for establishing a data channel further includes:
a second receiving module configured to receive a second request, where the second request includes a download address of an APP; and
a second determining module configured to determine the terminal or the data channel based on the download address of the APP.

Optionally, the first message is a Nimsas_SessionEventControl_Notify message; and
the second message is a Nimsas_MediaControl_MediaInstruction message.

The apparatus for establishing a data channel in the embodiments of this application may be an electronic device, such as an electronic device with an operating system, or a component in an electronic device, such as an integrated circuit or a chip.

The apparatus for establishing a data channel provided by the embodiments of this application can implement all the processes implemented by the method embodiment of FIG. 2 and achieve the same technical effects. To avoid repetition, details are not repeated herein.

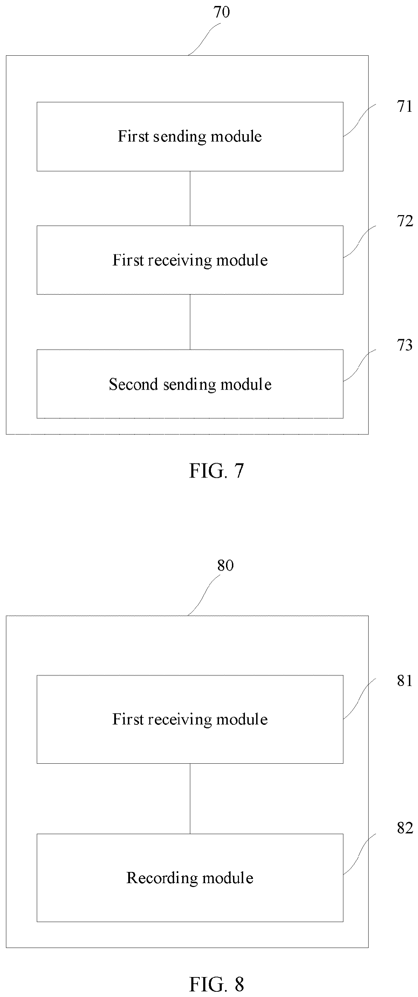

Referring to FIG. 7, an embodiment of this application further provides an apparatus 70 for establishing a data channel, including:
a first sending module 71 configured to send a first message to a first core network device, where the first message is used for establishing a data channel for a terminal, and the first message includes first information;
a first receiving module 72 configured to receive a second message sent by the first core network device, where the second message includes a URL corresponding to the data channel; and
a second sending module 73 configured to send a third message to a third core network device, where the third message is used for establishing the data channel for the terminal, and the third message includes information used for identifying the data channel and the URL; where
the first information includes at least one of the following:
   the information used for identifying the data channel; and
   information used for indicating an application content source corresponding to the data channel.

In the embodiments of this application, when the first message is sent to the first core network device to notify the establishment of the data channel for the terminal, the information used for identifying the data channel or the information used for indicating the application content source corresponding to the data channel is added. Thus, after creating the URL corresponding to the data channel, the first core network device can ascertain the correspondence between the data channel and the URL, and upon receiving a request containing the URL, can determine the UE or the data channel corresponding to the UE, thereby returning correct information. Additionally, when the third message is sent to the third core network device to notify the establishment of the data channel for the terminal, the information used for identifying the data channel and the URL assigned to the data channel are added, enabling the third core network device to ascertain the correspondence between the data channel and the URL, and upon receiving a request containing the information used for identifying the data channel, correctly replace the URL based on the correspondence, thereby completing DC services during a call.

Optionally, the information used for identifying the data channel includes at least one of the following:
a stream identifier stream ID corresponding to the data channel; and
description information of the data channel.

Optionally, the information used for indicating the application content source corresponding to the data channel includes at least one of the following:
information used for indicating that the application content source corresponding to the data channel is a local network provider;
information used for indicating that the application content source corresponding to the data channel is a local user;
information used for indicating that the application content source corresponding to the data channel is a remote network provider; and
information used for indicating that the application content source corresponding to the data channel is a remote user.

Optionally, the second message further includes the information used for identifying the data channel.

Optionally, the first message is a Nimsas_SessionEventControl_Notify message;
the second message is a Nimsas_MediaControl_MediaInstruction message; and
the third message is a Ndemf_ MediaResourceManagement_Create message.

The apparatus for establishing a data channel in the embodiments of this application may be an electronic device, such as an electronic device with an operating system, or a component in an electronic device, such as an integrated circuit or a chip.

The apparatus for establishing a data channel provided by the embodiments of this application can implement all the processes implemented by the method embodiment of FIG. 3 and achieve the same technical effects. To avoid repetition, details are not repeated herein.

Referring to FIG. 8, an embodiment of this application further provides an apparatus 80 for establishing a data channel, including:
a first receiving module 81 configured to receive a third message, where the third message is used for establishing a data channel for a terminal, and the third message includes information used for identifying the data channel and a URL corresponding to the data channel; and
a recording module 82 configured to record a first correspondence, where the first correspondence is a correspondence between the information used for identifying the data channel and the URL corresponding to the data channel.

In the embodiments of this application, the third message for establishing the channel for the terminal is received, where the third message carries the information used for identifying the data channel and the URL assigned to the data channel, enabling the ascertainment of the correspondence between the data channel and the URL. Upon receiving a request containing the information used for identifying the data channel, the URL can be correctly replaced based on the correspondence, thereby completing DC services during a call.

Optionally, the information used for identifying the data channel includes at least one of the following:
a stream identifier stream ID corresponding to the data channel; and
description information of the data channel.

Optionally, the apparatus 80 for establishing a data channel further includes:
a connection establishment module configured to establish a stream control transmission protocol SCTP connection to the terminal, where the SCTP connection corresponds to a first stream ID;
a second receiving module configured to receive a first request sent by the terminal through the SCTP connection, where the first request includes a root URL;
a determining module configured to determine the URL based on the first stream ID and the recorded first correspondence in a case that the first stream ID is the same as the stream identifier stream ID corresponding to the data channel;
a replacing module configured to replace the root URL in the first request with the URL to obtain a replaced first request; and
a sending module configured to send the replaced first request to the first core network device.

The above embodiment describes a case that the first stream ID is the same as the stream identifier stream ID corresponding to the data channel in the first correspondence. However, the first stream ID may alternatively be different from the stream identifier stream ID corresponding to the data channel in the first correspondence but the same as a stream ID in a second correspondence (different from the first correspondence) that is between a stream ID and a URL of a data channel and that is recorded by the third core network device. In this case, the URL for replacing the root URL is determined based on the second correspondence.

Optionally, the third message is a Ndemf_ MediaResourceManagement_Create message.

The apparatus for establishing a data channel in the embodiments of this application may be an electronic device, such as an electronic device with an operating system, or a component in an electronic device, such as an integrated circuit or a chip.

The apparatus for establishing a data channel provided by the embodiments of this application can implement all the processes implemented by the method embodiment of FIG. 4 and achieve the same technical effects. To avoid repetition, details are not repeated herein.

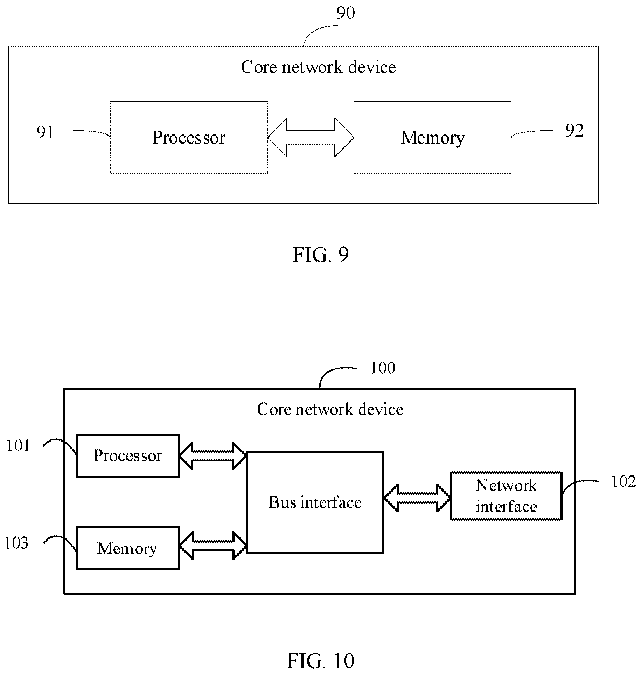

As shown in FIG. 9, an embodiment of this application further provides a core network device, including a processor 91 and a memory 92. The memory 92 stores a program or an instruction capable of running on the processor 91. For example, when the core network device 90 is a first core network device, when executed by the processor 91, the program or instruction implements the steps of the embodiments of the method for establishing a data channel performed by the first core network device as described above, and can achieve the same technical effects. When the core network device 90 is a second core network device, when executed by the processor 91, the program or instruction implements the steps of the embodiments of the method for establishing a data channel performed by the second core network device as described above, and can achieve the same technical effects. When the core network device 90 is a third core network device, when executed by the processor 91, the program or instruction implements the steps of embodiments of the method for establishing a data channel performed by the third core network device as described above, and can achieve the same technical effects. To avoid repetition, details are not repeated herein.

An embodiment of this application further provides a first core network device, including a processor and a communication interface. The communication interface is configured to receive a first message sent by a second core network device, where the first message is used for establishing a data channel for a terminal, and the first message includes first information. The processor is configured to create, based on the first information, a URL corresponding to the data channel. The communication interface is further configured to send a second message to the second core network device, where the second message includes the URL; where
the first information includes at least one of the following:
information used for identifying the data channel; and
information used for indicating an application content source corresponding to the data channel.

This first core network device embodiment corresponds to the first core network device method embodiment described above, and all implementation processes and implementation manners of the above method embodiment are applicable to this first core network device embodiment and can achieve the same technical effects.

An embodiment of this application further provides a second core network device, including a processor and a communication interface. The communication interface is configured to send a first message to a first core network device, where the first message is used for establishing a data channel for a terminal, and the first message includes first information; receive a second message sent by the first core network device, where the second message includes a URL corresponding to the data channel; and send a third message to a third core network device, where the third message is used for establishing the data channel for the terminal, and the third message includes information used for identifying the data channel and the URL; where
the first information includes at least one of the following:
the information used for identifying the data channel; and
information used for indicating an application content source corresponding to the data channel.

This second core network device embodiment corresponds to the second core network device method embodiment described above, and all implementation processes and implementation manners of the above method embodiment are applicable to this second core network device embodiment and can achieve the same technical effects.

An embodiment of this application further provides a third core network device, including a processor and a communication interface. The communication interface is configured to receive a third message, where the third message is used for establishing a data channel for a terminal, and the third message includes information used for identifying the data channel and a URL corresponding to the data channel. The processor is configured to record a first correspondence, where the first correspondence is a correspondence between the information used for identifying the data channel and the URL corresponding to the data channel.

This third core network device embodiment corresponds to the third core network device method embodiment described above, and all implementation processes and implementation manners of the above method embodiment are applicable to this third core network device embodiment and can achieve the same technical effects.

Specifically, an embodiment of this application further provides a core network device. As shown in FIG. 10, the core network device 100 includes a processor 101, a network interface 102, and a memory 103. The network interface 102 is, for example, a common public radio interface (common public radio interface, CPRI).

Specifically, the core network device 100 of the embodiments of the present invention further includes an instruction or a program stored in the memory 103 and capable of running on the processor 101. The processor 101 invokes the instruction or program in the memory 103 to perform the method performed by the modules shown in FIG. 6, FIG. 7, or FIG. 8, and achieves the same technical effects. To avoid repetition, details are not repeated herein.

An embodiment of this application further provides a readable storage medium, where the readable storage medium stores a program or an instruction, and when executed by a processor, the program or instruction implements the processes of the embodiment of the method for establishing a data channel described above, and can achieve the same technical effects. To avoid repetition, details are not repeated herein.

The processor is the processor in the terminal described in the above embodiments. The readable storage medium includes a computer-readable storage medium, such as a computer read-only memory ROM, a random access memory RAM, a magnetic disk, or an optical disk.

An embodiment of this application further provides a chip, and the chip includes a processor and a communication interface. The communication interface is coupled to the processor, and the processor is configured to run a program or an instruction to implement the processes of the embodiment of the method for establishing a data channel described above, and can achieve the same technical effects. To avoid repetition, details are not repeated herein.

It should be understood that the chip mentioned in the embodiments of this application may also be referred to as a system-level chip, a system chip, a chip system, or a system-on-chip.

An embodiment of this application further provides a computer program/program product, where the computer program/program product is stored in a storage medium, and the computer program/program product is executed by at least one processor to implement the processes of the embodiment of the method for establishing a data channel described above, and achieve the same technical effects. To avoid repetition, details are not repeated herein.

An embodiment of this application further provides a communication system, including a first core network device, a second core network device, and a third core network device. The first core network device can be configured to perform the steps of the method for establishing a data channel performed by the first core network device as described above. The second core network device can be configured to perform the steps of the method for establishing a data channel performed by the second core network device as described above. The third core network device can be configured to perform the steps of the method for establishing a data channel performed by the third core network device as described above.

It should be noted that, in this document, the terms "include," "comprise," or any other variants thereof are intended to cover a non-exclusive inclusion, such that a process, method, article, or apparatus that includes a series of elements not only includes those elements but also includes other elements not expressly listed, or further includes elements inherent to such a process, method, article, or apparatus. In the absence of further restrictions, an element defined by the phrase "including a ..." does not exclude the presence of additional identical elements in the process, method, article, or apparatus that includes the element. Additionally, it should be noted that the scope of the methods and apparatuses in the embodiments of this application is not limited to performing functions in the order shown or discussed, but may also include performing functions in a substantially simultaneous manner or in a reverse order based on the functions involved. For example, the described methods may be performed in an order different from that described, and various steps may be added, omitted, or combined. Additionally, features described with reference to certain examples may be combined in other examples.

Through the description of the above embodiments, those skilled in the art can clearly understand that the methods of the above embodiments can be implemented by means of software plus a necessary general hardware platform, or, of course, by hardware, but in many cases, the former is a better implementation. Based on this understanding, the technical solution of this application, or the part thereof that contributes to the related art, may be embodied in the form of a computer software product, where the computer software product is stored in a storage medium (such as ROM/RAM, magnetic disk, or optical disk) and includes several instructions to enable a terminal (which may be a mobile phone, a computer, a server, an air conditioner, a network device, or the like) to perform the methods described in the various embodiments of this application.

The embodiments of this application have been described above in conjunction with the accompanying drawings, but this application is not limited to the specific embodiments described above. The specific embodiments described above are merely illustrative and not restrictive. Those of ordinary skill in the art, under the inspiration of this application, can make many forms without departing from the purpose of this application and the scope protected by the claims, all of which fall within the protection of this application.

## Claims

1. A method for establishing a data channel, comprising:
receiving, by a first core network device, a first message sent by a second core network device, wherein the first message is used for establishing a data channel for a terminal, and the first message comprises first information;
creating, by the first core network device based on the first information, a uniform resource locator URL corresponding to the data channel; and
sending, by the first core network device, a second message to the second core network device, wherein the second message comprises the URL;
wherein the first information comprises at least one of the following:
information used for identifying the data channel; and
information used for indicating an application content source corresponding to the data channel.

2. The method according to claim 1, wherein the information used for identifying the data channel comprises at least one of the following:
a stream identifier stream ID corresponding to the data channel; and
description information of the data channel.

3. The method according to claim 1 or 2, wherein the information used for indicating the application content source corresponding to the data channel comprises at least one of the following:
information used for indicating that the application content source corresponding to the data channel is a local network provider;
information used for indicating that the application content source corresponding to the data channel is a local user;
information used for indicating that the application content source corresponding to the data channel is a remote network provider; and
information used for indicating that the application content source corresponding to the data channel is a remote user.

4. The method according to claim 1, wherein the second message further comprises the information used for identifying the data channel.

5. The method according to claim 1 or 4, further comprising:
receiving, by the first core network device, a first request, wherein the first request comprises the URL; and
determining, by the first core network device, the terminal or the data channel based on the URL.

6. The method according to claim 5, further comprising:
sending, by the first core network device, information corresponding to the data channel to the terminal based on the first request.

7. The method according to claim 6, wherein the information comprises an application APP list, and download addresses of APPs in the APP list are related to the terminal or the data channel.

8. The method according to claim 7, further comprising:
receiving, by the first core network device, a second request, wherein the second request comprises a download address of an APP; and
determining, by the first core network device, the terminal or the data channel based on the download address of the APP.

9. The method according to any one of claims 1 to 8, wherein the first core network device is a data channel signaling function DCSF.

10. The method according to any one of claims 1 to 9, wherein
the first message is an IP multimedia subsystem application server session event control notify Nimsas_SessionEventControl_Notify message; or
the second message is an IP multimedia subsystem application server media control media instruction Nimsas_MediaControl_MediaInstruction message.

11. A method for establishing a data channel, comprising:
sending, by a second core network device, a first message to a first core network device, wherein the first message is used for establishing a data channel for a terminal, and the first message comprises first information;
receiving, by the second core network device, a second message sent by the first core network device, wherein the second message comprises a URL corresponding to the data channel; and
sending, by the second core network device, a third message to a third core network device, wherein the third message is used for establishing the data channel for the terminal, and the third message comprises information used for identifying the data channel and the URL;
wherein the first information comprises at least one of the following:
the information used for identifying the data channel; and
information used for indicating an application content source corresponding to the data channel.

12. The method according to claim 11, wherein
the information used for identifying the data channel comprises at least one of the following:
a stream identifier stream ID corresponding to the data channel; and
description information of the data channel.

13. The method according to claim 11 or 12, wherein the information used for indicating the application content source corresponding to the data channel comprises at least one of the following:
information used for indicating that the application content source corresponding to the data channel is a local network provider;
information used for indicating that the application content source corresponding to the data channel is a local user;
information used for indicating that the application content source corresponding to the data channel is a remote network provider; and
information used for indicating that the application content source corresponding to the data channel is a remote user.

14. The method according to claim 11, wherein the second message further comprises the information used for identifying the data channel.

15. The method according to any one of claims 11 to 14, wherein the second core network device is an IP multimedia subsystem application server IMS AS.

16. The method according to any one of claims 11 to 15, wherein
the first message is a Nimsas_SessionEventControl _Notify message;
the second message is a Nimsas_MediaControl_MediaInstruction message; or
the third message is a data channel media function media resource management create Ndcmf_MediaResourceManagement_Create message.

17. A method for establishing a data channel, comprising:
receiving, by a third core network device, a third message, wherein the third message is used for establishing a data channel for a terminal, and the third message comprises information used for identifying the data channel and a URL corresponding to the data channel; and
recording, by the third core network device, a first correspondence, wherein the first correspondence is a correspondence between the information used for identifying the data channel and the URL corresponding to the data channel.

18. The method according to claim 17, wherein the information used for identifying the data channel comprises at least one of the following:
a stream identifier stream ID corresponding to the data channel; and
description information of the data channel.

19. The method according to claim 18, wherein the method further comprises:
establishing, by the third core network device, a stream control transmission protocol SCTP connection to the terminal, wherein the SCTP connection corresponds to a first stream ID;
receiving, by the third core network device, a first request sent by the terminal through the SCTP connection, wherein the first request comprises a root URL;
determining, by the third core network device, the URL based on the first stream ID and the recorded first correspondence in a case that the first stream ID is the same as the stream identifier stream ID corresponding to the data channel;
replacing, by the third core network device, the root URL in the first request with the URL to obtain a replaced first request; and
sending, by the third core network device, the replaced first request to a first core network device.

20. The method according to any one of claims 17 to 19, wherein the third core network device is a data channel media function DCMF, a media resource function MRF, or an enhanced MRF.

21. The method according to any one of claims 17 to 20, wherein
the third message is a Ndemf_ MediaResourceManagement_Create message.

22. An apparatus for establishing a data channel, comprising:
a first receiving module configured to receive a first message sent by a second core network device, wherein the first message is used for establishing a data channel for a terminal, and the first message comprises first information;
a URL creation module configured to create, based on the first information, a URL corresponding to the data channel; and
a first sending module configured to send a second message to the second core network device, wherein the second message comprises the URL; wherein
the first information comprises at least one of the following:
information used for identifying the data channel; and
information used for indicating an application content source corresponding to the data channel.

23. An apparatus for establishing a data channel, comprising:
a first sending module configured to send a first message to a first core network device, wherein the first message is used for establishing a data channel for a terminal, and the first message comprises first information;
a first receiving module configured to receive a second message sent by the first core network device, wherein the second message comprises a URL corresponding to the data channel; and
a second sending module configured to send a third message to a third core network device, wherein the third message is used for establishing the data channel for the terminal, and the third message comprises information used for identifying the data channel and the URL; wherein
the first information comprises at least one of the following:
the information used for identifying the data channel; and
information used for indicating an application content source corresponding to the data channel.

24. An apparatus for establishing a data channel, comprising:
a first receiving module configured to receive a third message, wherein the third message is used for establishing a data channel for a terminal, and the third message comprises information used for identifying the data channel and a URL corresponding to the data channel; and
a recording module configured to record a first correspondence, wherein the first correspondence is a correspondence between the information used for identifying the data channel and the URL corresponding to the data channel.

25. A first core network device, comprising a processor and a memory, wherein the memory stores a program or an instruction capable of running on the processor, and when executed by the processor, the program or instruction implements the steps of the method for establishing a data channel according to any one of claims 1 to 10.

26. A second core network device, comprising a processor and a memory, wherein the memory stores a program or an instruction capable of running on the processor, and when executed by the processor, the program or instruction implements the steps of the method for establishing a data channel according to any one of claims 11 to 16.

27. A third core network device, comprising a processor and a memory, wherein the memory stores a program or an instruction capable of running on the processor, and when executed by the processor, the program or instruction implements the steps of the method for establishing a data channel according to any one of claims 17 to 21.

28. A readable storage medium, wherein the readable storage medium stores a program or an instruction, and when executed by a processor, the program or instruction implements the steps of the method for establishing a data channel according to any one of claims 1 to 10, the steps of the method for establishing a data channel according to any one of claims 11 to 16, or the steps of the method for establishing a data channel according to any one of claims 17 to 21.
